Europäisches Patentamt

European Patent Office

Office européen des brevets

(11) Numéro de publication: **0 122 845**
**A1**

## (12) DEMANDE DE BREVET EUROPEEN

(21) Numéro de dépôt: 84400664.3

(22) Date de dépôt: 04.04.84

(51) Int. Cl.³: **H 04 Q 3/52**
**H 04 B 9/00, G 02 B 7/26**

(30) Priorité: 08.04.83 FR 8305789

(43) Date de publication de la demande:
24.10.84 Bulletin 84/43

(84) Etats contractants désignés:
AT BE CH DE FR GB IT LI LU NL SE

(71) Demandeur: SOCIETE D'OPTIQUE, PRECISION
ELECTRONIQUE ET MECANIQUE - SOPELEM
102 rue Chaptal
F-92300 Levallois-Perret(FR)

(72) Inventeur: Moirez, Jacques
4 avenue des Gobelins
F-75005 Paris(FR)

(72) Inventeur: Sellin, Rémy
2 allée Leriche
F-93110 Rosny-Sous-Bois(FR)

(74) Mandataire: Bouget, Lucien et al,
CREUSOT-LOIRE 15 rue Pasquier
F-75383 Paris Cedex 08(FR)

(54) Dispositif de commutation de fibres optiques.

(57) La présente invention se rapporte à un dispositif de commutation de fibres optiques du type comportant un ensemble de réflecteurs escamotables.

Ce dispositif sert à commuter des fibres optiques (31, 32, 33) et comporte un ensemble de réflecteurs escamotables (1) placés aux noeuds d'un réseau plan formé de lignes (21) et colonnes (22) sécantes et de groupes opposés de fibres (31, 32) tels que chaque fibre (31, 32) soit placée dans l'alignement ou parallèlement à une ligne (21) du réseau et un troisième groupe de fibres (33) tel que chaque fibre (33) soit placée dans l'alignement ou parallèlement à une colonne (22) du réseau, chaque réflecteur (1) étant susceptible d'occuper soit une position où il réfléchit les signaux lumineux entre une fibre (31) du premier groupe et une fibre (33) du troisième groupe soit une position escamotée de manière à laisser passer les signaux lumineux entre les fibres (31, 32) de deux groupes opposés, chaque fibre étant associée à un objectif convergent de focalisation (41, 42, 43) centré sur une ligne ou une colonne, entre l'extrémité de la fibre et le premier réflecteur, et il est caractérisé par le fait qu'il comporte une pluralité de paires d'optiques de champ convergentes (51, 52) qui sont associées chacune à un noeud de la diagonale (23) du réseau de manière qu'une des deux optiques (51) soit centrée sur la colonne (22) passant par ledit noeud et que l'autre (52) soit centrée sur la ligne (21) passant par ledit noeud.

./...

EP 0 122 845 A1

FIG 1

## Dispositif de commutation de fibres optiques

La présente invention se rapporte à un dispositif de commutation de fibres optiques du type comportant un ensemble de réflecteurs escamotables positionnés aux noeuds d'un réseau plan formé de lignes et colonnes sécantes et servant à coupler optiquement des fibres émettrices et réceptrices disposées coaxialement ou parallèlement auxdites lignes et colonnes.

On connaît par le brevet FR-2.500.247 un concentrateur-distributeur optique matriciel du type ci-dessus. Chaque fibre émettrice ou réceptrice est placée au foyer d'un objectif qui envoie ou reçoit un faisceau de faible divergence et d'un certain diamètre. Comme la distance entre une fibre émettrice et une fibre réceptrice est relativement grande, il y a des pertes dues à la divergence du faisceau.

La présente invention a pour but de fournir un dispositif de commutation du type constitué par un ensemble de réflecteurs placés aux noeuds d'un réseau et dans lequel les pertes de flux lumineux sont réduites.

Le dispositif de commutation selon l'invention comporte un ensemble de réflecteurs escamotables placés aux noeuds d'un réseau plan formé de lignes et colonnes sécantes, deux groupes opposés de fibres tels que chaque fibre soit placée dans l'alignement ou parallèlement à une ligne du réseau et un troisième groupe de fibres tel que chaque fibre soit placée dans l'alignement ou parallèlement à une colonne de réseau, chaque réflecteur étant susceptible d'occuper soit une position où il réfléchit les signaux lumineux entre une fibre du premier groupe et une fibre du troisième groupe soit une position escamotée de manière à laisser passer les signaux lumineux entre les fibres de deux groupes opposés, chaque fibre étant associée à un objectif convergent de focalisation centré sur une ligne ou une colonne, entre l'extrémité de fibre et le premier réflecteur, et il est caractérisé par le fait qu'il comporte une pluralité de paires d'optiques de champ convergentes qui sont associées chacune à un noeud de la diagonale du réseau de manière qu'une des deux optiques soit centrée sur la colonne passant le dit noeud et que l'autre soit centrée sur la ligne passant par le dit noeud.

L'invention va maintenant être décrite avec plus de détails en se référant à un mode de réalisation donné à titre d'exemple et représenté par les dessins annexés.

La figure 1 est une vue schématique en plan du dispositif selon l'invention.

La figure 2 montre un mode de réalisation du mécanisme de commande d'un réflecteur escamotable.

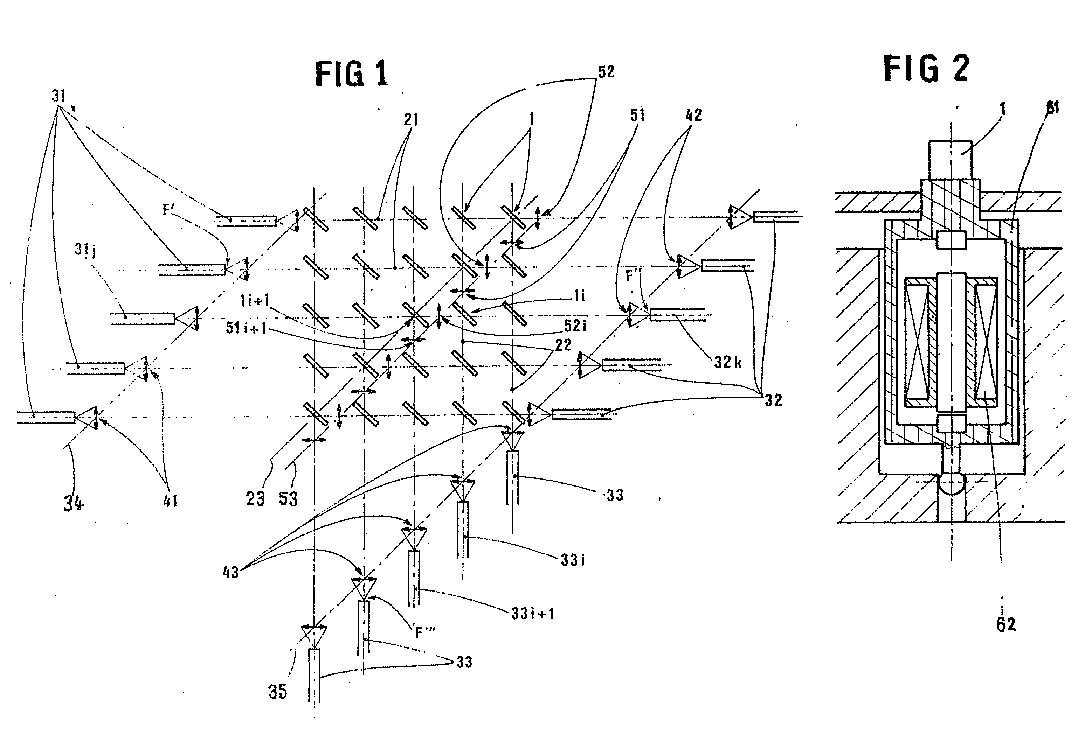

Le dispositif représenté par la figure 1 comporte un ensemble de réflecteurs de lumière escamotables 1 qui sont disposés aux noeuds d'un réseau formé de lignes fictives 21 et de colonnes fictives 22 sécantes et coplanaires. Le réseau est formé, par exemple, comme sur le dessin, de lignes et colonnes se coupant à 90°.

Ces réflecteurs 1 sont constitués par des miroirs ordinaires ou semi-transparents ou par des prismes tels que des prismes pentagonaux ou des cubes de Lummer.

Les réflecteurs coopèrent avec deux groupes opposés de fibres 31 et 32 tels que les fibres soient placées dans l'alignement ou parallèlement aux lignes 21 du réseau. Les fibres 31 et 32 sont disposées de part et d'autre du réseau de réflecteurs et dans le plan de ce réseau.

Les réflecteurs escamotables 1 coopèrent par ailleurs avec un groupe de fibres 33 qui sont placées dans l'alignement ou parallèlement aux colonnes 22, dans le plan du réseau.

En se référant à la figure 2, chaque réflecteur 1 est monté sur une armature 61 qui est guidée selon un axe perpendiculaire au plan du réseau, et est déplacée entre deux positions par une bobine 62. Lorsque le réflecteur 1 occupe la position de repos éloignée du plan du réseau, il n'intercepte pas la lumière selon la ligne ou la colonne. Lorsque ce réflecteur occupe la position de travail dans le plan du réseau, il réfléchit la lumière d'une ligne à une colonne et vice-versa.

Les fibres 31 sont par exemple émettrices, les fibres 32 et 33 étant réceptrices.

Chaque fibre 31, 32, 33 est associée à un objectif de focalisation convergent qui est repéré 41, 42, 43, respectivement. Cet objectif est centré sur une ligne 21 ou colonne 22, entre l'extrémité de fibre et le premier réflecteur. Il est collé sur un bloc de verre auquel sont collées les fibres.

Le dispositif comporte, une pluralité de paires d'optiques convergentes de champ 51 et 52 qui sont associées chacune à un noeud de la diagonale 23 passant par les noeuds du réseau de manière qu'une des deux optiques, repère 51, soit centrée sur la colonne 22 passant par ce noeud et que l'autre, repère 52, soit centrée sur la ligne 21 passant par ce noeud. Chaque optique 51 ou 52 est disposée près du noeud considéré.

Les optiques de champ sont alignées sur une ligne fictive 53 parallèle à la diagonale 23, les objectifs de focalisation 41, 42, 43 étant alignés sur des lignes fictives 34, 35 parallèles à ladite diagonale 23. Les extrémités des fibres 31, 32, 33 sont elles-mêmes placées sur des lignes fictives parallèles à la diagonale 23. Par cette disposition, la distance entre une fibre émettrice et une fibre réceptrice est constante, l'optique de champ 51 ou 52 étant au milieu du trajet séparant la fibre émettrice de la fibre réceptrice.

Les foyers F', F", F''' des objectifs 41, 42, 43 ne sont pas placés sur les extrémités des fibres. L'optique 41 forme une image intermédiaire qui est projetée par l'optique 42 ou 43 sur la fibre réceptrice 32 ou 33 respectivement. L'optique de champ 51 ou 52 convergente a pour fonction de projeter le foyer image de l'objectif 41 sur le foyer objet de l'objectif 42 ou 43. Dans le mode de réalisation qui est représenté où les ouvertures numériques des fibres sont égales et où les optiques 41, 42, 43 sont identiques, les optiques 51 et 52 travaillent au grandissement un.

Du fait que le foyer image d'une optique 41 est conjugué au foyer objet d'une optique 42 ou 43, tous les axes des cônes de lumière émis par les points de la surface émettrice d'une fibre 31 arrivent perpendiculairement sur la surface réceptrice d'une fibre réceptrice 42 ou 43.

En variante on pourrait prévoir plusieurs optiques de champ pour conjuguer le foyer image de la première optique 41 et le foyer objet de la dernière optique 42 ou 43.

Le fonctionnement du dispositif est le suivant.

Si on veut commuter une fibre émettrice $31_j$ sur une fibre réceptrice $33_i$ on utilise l'optique de champ $52_i$ et le réflecteur escamotable $1_i$.

Si on veut par contre conjuguer la fibre émettrice $31_j$ et la fibre réceptrice $33_{i+1}$ on utilise l'optique de champ $51_{i+1}$ et le réflecteur $1_{i+1}$.

Si on veut maintenant conjuguer la fibre émettrice $31_j$ et la fibre réceptrice $32_k$ on utilise uniquement l'optique de champ $52_i$.

Il est bien entendu que l'on peut, sans sortir du cadre de l'invention, imaginer des variantes et des perfectionnements de détail et de même envisager l'emploi de moyens équivalents.

REVENDICATIONS

1. Dispositif de commutation de fibres optiques (31, 32, 33) comportant un ensemble de réflecteurs escamotables (1) placés aux noeuds d'un réseau plan formé de lignes (21) et colonnes (22) sécantes et de groupes opposés de fibres (31, 32) tels que chaque fibre (31, 32) soit placée dans l'alignement ou parallèlement à une ligne (21) du réseau et un troisième groupe de fibres (33) tel que chaque fibre (33) soit placée dans l'alignement ou parallèlement à une colonne (22) du réseau, chaque réflecteur (1) étant susceptible d'occuper soit une position où il réfléchit les signaux lumineux entre une fibre (31) du premier groupe et une fibre (33) du troisième groupe soit une position escamotée de manière à laisser passer les signaux lumineux entre les fibres (31, 32) de deux groupes opposés, chaque fibre étant associée à un objectif convergent de focalisation (41, 42, 43) centré sur une ligne ou colonne, entre l'extrémité de la fibre et le premier réflecteur, caractérisé par le fait qu'il comporte une pluralité de paires d'optiques de champ convergentes (51,52) qui sont associées chacune à un noeud de la diagonale (23) du réseau de manière qu'une des deux optiques (51) soit centrée sur la colonne (22) passant par ledit noeud et que l'autre (52) soit centrée sur la ligne (21) passant par ledit noeud.

2. Dispositif selon la revendication 1 caractérisé par le fait que les optiques de champ (51,52) sont alignées sur une ligne fictive (53) parallèle à la diagonale (23) du réseau, les objectifs de focalisation (41,42,43) étant alignés sur des lignes fictives (34,35) parallèles à ladite diagonale.

FIG 1

FIG 2

1/1

0 1 22845

**0122845**

Numéro de la demande

Office européen
des brevets

**RAPPORT DE RECHERCHE EUROPEENNE**

EP    84 40 0664

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,A | GB-A-2 093 304  (L'ETAT FRANCAIS)<br>* Page 2, ligne 103 - page 3, ligne 56; figure 1 * | 1 | H 04 Q    3/52<br>H 04 B    9/00<br>G 02 B    7/26 |
| | --- | | |
| A | PATENTS ABSTRACTS OF JAPAN, vol. 2, no. 94, 5 août 1978, page 4476 E 78; & JP - A - 53 59 310 (FUJITSU K.K.) 29-05-1978<br>* Abrégé * | 1 | |
| | --- | | |
| A | PATENTS ABSTRACTS OF JAPAN, vol. 2, no. 115, 25 septembre 1978, page 6486 E 78; & JP - A - 53 80 904 (FUJITSU K.K.) 17-07-1978<br>* Abrégé * | 2 | |
| | --- | | **DOMAINES TECHNIQUES RECHERCHES (Int. Cl. 3)** |
| A | JOURNAL OF OPTICAL COMMUNICATIONS, vol. 1, no. 2, novembre 1980, pages 74-79, Fachverlag Schiele & Schön, Berlin, DE; H. YAMAMOTO et al.: "Large-scale and low-loss optical switch matrix for optical switching systems"<br>* Figure 1 * | 2 | H 04 Q<br>H 04 B<br>G 02 B |
| | ----- | | |

Le présent rapport de recherche a été établi pour toutes les revendications

| Lieu de la recherche | Date d'achèvement de la recherche | Examinateur |
|---|---|---|
| LA HAYE | 27-06-1984 | VANDEVENNE M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                 

& : membre de la même famille, document correspondant

OEB Form 1503. 03.82